# EUROPEAN PATENT APPLICATION

(11) **EP 2 216 159 A1**
(43) Date of publication of application: **11.08.2010**
(21) Application number: 09152199.7
(22) Date of filing: 05.02.2009
(51) Int. Cl.: B29C 45/40

(54) **Ejection assemblies for injection moulding systems**

(71) Applicant: Etervind AB, 192 69 Sollentuna (SE)
(72) Inventor: Axelsson, Ernst Gösta Robert, 563 91, Gränna (SE); Qvänstedt, Carl Martin Samuel, 564 36, Bankeryd (SE); Elwing, Erik Viktor, 554 66, Jönköping (SE); Rinman, Johan Emil, 554 72, Jönköping (SE)
(74) Representative: Holme Patent A/S

(57) **Abstract**

The present invention relates to an injection moulding system (1) with a unique placement and actuation of an ejector system. A method for ejecting moulded articles from a mould cavity (21) of an injection moulding system (1) according to the present invention is disclosed. The present invention also relates to a method of manufacturing an ejector pin assembly (123) for ejecting moulded parts from a mould of an injection-moulding apparatus (1). In addition, an angular ejector system (150) is disclosed for ejecting moulded articles from the mould of an injection moulding system (1). A method for ejecting moulded articles from at least one mould half (151) of an injection moulding system uses the angular ejector system (150) of the present invention.

## Description

The present invention relates to an injection moulding system with a unique placement and actuation of an ejector system. Furthermore, the present invention relates to a method for ejecting moulded articles from a mould cavity of an injection moulding system according to the present invention.

Injection moulding machines typically comprise a mould consisting of a stationary mould half, which usually is the female half, and a movable mould half, which usually is the male half, which together form the cavity for receiving the melt. The female and the male half are sometimes referred to as mould cavity and mould core, respectively. The mould halves are fastened to a stationary and a movable platen, respectively, by means of suitable mounting means such as support plates, backplates, attachment bars or other fastening arrangements. After clamping the mould halves together, molten plastic is injected into the cavity by an injection nozzle through a suitable aperture, called the sprue, within the fixed mould half. After a given time period of solidification, the mould halves are separated and the moulded article is ejected.

Ejection is achieved by using an ejector system, which typically comprises several ejector pins for engaging the moulded article with their tips. The rear ends of the pins are usually fastened between a retainer plate and an ejector plate, the latter of which receives an actuator rod. The retainer plate and the ejector plate are sometimes referred to as upper and lower ejector plates, respectively. Upon axial movement of the ejector plate, for example by using a hydraulically or electrically actuated rod, the ejector pins pass through a number of apertures in the movable mould half. The apertures are usually provided with a clearance to avoid undue friction. The ejector plate is often rearwardly spring-biased by ejector return pins and a return spring disposed between the ejector plate and the support plate carrying the movable mould half.

When the mould halves separate, the moulded article is usually carried on the movable mould half which comprises the male half of the mould cavity. Therefore, the ejector plate is traditionally placed within a space created on the movable side of an injection moulding system, usually between the movable platen and support plate, the space being generated by side rails. The classic terminology therefore distinguishes an injection half and an ejector half of a mould. Accordingly, ejection takes place by axial movement of the ejector pins through apertures in the movable mould half in a direction towards the mould cavity.

As an example of this, US Patent No. 6113376 discloses an arrangement with a carrier plate that is anchored to the movable platen. A rotatable nut that is axially immovably mounted to the carrier plate receives a spindle, which is fixed to an ejector plate. An electric motor is used for rotating the nut, thereby linearly reciprocating the ejector plate by means of the spindle for ejecting the moulded article.

Ejection systems employing ejector pins usually leave unsightly pin marks on the moulded article. The occurrence of pin marks owes to the fact that the tips of ejector pins form a part of the moulding cavity surface. It is usually attempted to adjust the pins' lengths such that a flush surface is formed on the moulded article. This is not always possible due to variable expansion and compression of the mould and inherent tolerances in mould production. Consequently, a non-flush arrangement of pin tips and mould cavity surface will result in visible indentations or protrusions on the article surface.

A further surface defect occurs at the face of separation of the sprue and the moulded article. These raised spots or small cavities, which are known as sprue marks, may cause a weakened zone within the moulded article and may furthermore be an aesthetical concern.

As outlined above, the ejection system of an injection moulding system is traditionally disposed within the movable side, which usually includes the actual mould, one or more support plates and the movable platen. An example of this arrangement can be found in Japanese Patent Application JP 2000280306. Articles having a trough-shaped or cup-shaped surface will typically shrink around, and stick to, the male mould half, which is the reason that this half is traditionally placed on the movable side of the injection moulding system, which comprises the ejection system. Accordingly, pin marks will normally be visible only on the inside surface of articles that are cup-shaped or that have concave surfaces in general.

However, any sprue marks will inevitably end up on the surface that faces the female mould half, which is the outside surface of a moulded cup-shaped article, since the injection sprue is normally placed on the stationary mould side. Thus, the sprue mark will be visible and will impair the overall aesthetic quality of the moulded article.

Thus, it is a first aspect of the present invention to provide an injection moulding system for production of moulded articles with an improved aesthetic quality.

It is a second aspect of the present invention to provide an injection moulding system that allows for moulding of articles with both sprue marks and pin marks placed at advantageous locations on the surface of the moulded article.

It is a third aspect of the present invention to provide an injection moulding system that allows for a flexible arrangement of its components.

It is a fourth aspect of the present invention to provide an injection moulding system that allows for a short cycle time.

The new and unique way in which the present invention fulfils one or more of the above-mentioned aspects is to provide an injection moulding system for producing moulded articles within at least one mould cavity formed at least by a movable mould half and a stationary mould half, the injection moulding system comprising opposed stationary and movable platens, a stationary mould half fixed to the stationary platen, a movable mould half fixed to the movable platen, each mould half being fixed to its respective platen by respective mounting means, each mould half comprising a respective cavity surface which at least partly constitutes a boundary of the mould cavity, at least one inlet opening formed within at least one of the cavity surfaces for admitting moulding material into the mould cavity, an ejector system comprising one or more ejector pins fastened to at least one ejector plate, wherein each ejector pin has a tip for engaging and ejecting a moulded article from a mould half, ejector actuation means for reciprocating the ejector plate between a retracted position and an ejecting position, wherein the ejector plate is disposed between the stationary mould half and the stationary platen for reciprocating from the retracted position to the ejecting position, each ejector pin is arranged to reciprocate in apertures formed within the stationary mould half, each ejector pin tip is substantially flush with the cavity surface of the stationary mould half in the retracted position, and each ejector pin at least partly protrudes from the cavity surface of the stationary mould half in the ejecting position.

The mould halves may be fixed to their respective platens by any suitable mounting means well known in the art. These include the use of support plates, bar arrangements, backplate fixtures or the like. The mounting means used will advantageously leave sufficient operational space for disposing the ejector plate assembly between the stationary mould half and the stationary platen. This may be achieved by various means known in the art such as the use of bar-shaped elements leaving a central cavity in the middle or the use of support plates having one or more central, optionally quadrangular clearances. Alternatively, spacer blocks may be employed.

Each mould half comprises a cavity surface which at least partly constitutes the boundary of the mould cavity. Advantageously, wherever a male mould half, i.e. a "core" side, and a female mould half are involved, the male mould half may be attached to the stationary platen. Since the sprue mark is conventionally created on the article surface abutting the cavity surface of the stationary mould half, the sprue mark will according to the present invention be made on the concave inside surface of the article, which usually is the surface that is least exposed when using the article. The inlet opening, which is advantageously formed within the stationary mould half, may communicate with a sprue bushing for guiding polymeric material or other compositions from the injection unit into the mould cavity. Other arrangements as the afore-mentioned are conceivable. The present invention is not restricted to injection moulding systems that inject the melt via the stationary mould half. Similarly, standard elements such as the sprue bushing are not essential for the inventive concept of the present system.

The ejector system has one or more ejector pins fastened to at least one ejector plate, wherein each ejector pin has a tip for engaging and ejecting a moulded article from a mould half. The ejector system may have the form of well-known prior art ejector plate assemblies in which the flange-shaped heads of the ejector pins are clamped between an ejector plate and a retainer plate. Alternatively, an ejector pin assembly according to the present invention may be employed. The tips of the pins may be flat or bevelled, or may have any other shape or design. Both the plate and the pins may be made of stainless steel, chrome-plated steel or any other suitable material known in the art.

The ejector actuation means for reciprocating the ejector plate from a retracted position to an ejecting position may include any suitable mechanical actuation means known in the art. This includes hydraulic, pneumatic, electric or electro-magnetic actuation.

As used herein, the retracted position of the ejector plate relates to a position where the ejector pins do not protrude into the mould cavity defined by the two mould halves. In the retracted position each ejector pin tip is substantially flush with the cavity surface. As used herein, the term "substantially flush" includes all arrangements where the an ejector pin tip is flush with the cavity surface, subject to inherent tolerances of mould design and production, expansion and compression of the mould material and the like. The term "substantially flush" also includes arrangements where an ejector pin tip is deliberately designed to extend slightly above or below the cavity surface. A useful interval included by this terminology lies between zero and 0.5 mm above/below the cavity surface.

The ejecting position includes arrangements where one or more pins protrude from the cavity surface so as to eject the moulded product from a mould half.

The ejector plate is disposed between the stationary mould half and the stationary platen for reciprocating between the retracted position and the ejecting position. As mentioned above, the ejector plate may be located within a cavity, housing, clearance or the like that is formed between the stationary mould half and the stationary platen. Exemplary means for achieving this are outlined above.

During operation of the injection moulding system the ejector pins of the ejector system reciprocate in apertures formed within the stationary mould half. The apertures will typically extend from the mould half's outer to its inner surface, that is, from the surface which at least partly faces a support plate or other mounting means, to the surface that makes up at least part of the mould cavity. The apertures may have an orientation that is parallel to the mould clamping direction. However, any useful orientation of the apertures diverting from the above is also conceivable.

When the ejector plate is in its ejecting position the pins protrude from the cavity surface of the stationary mould half. Thereby, any pin marks are made on the article surface that faces the cavity surface of the stationary mould half. Hence, both the sprue mark and one or more pin marks may be confined to the same article surface. This is especially advantageous when the article is cup-shaped, comprises a concave surface, dents, valleys or the like. When using the article, this type of surface will typically be less exposed than other surfaces of the article. Accordingly, injection moulding with the system of the present invention makes it possible to conceal all marks by placing them at inconspicuous locations on the articles surface. Another advantage of the injection moulding system of the present invention resides in the fact that ejection can take place simultaneously with the retreat of the movable mould half during opening of the mould halves. While the movable platen moves back to its open position, the moulded article may be ejected from the stationary mould half, which contributes to a shorter time per cycle. In prior art systems, the movable mould half is moved back to its open position, whereupon the moulded article is ejected from the movable mould half.

In a preferred embodiment of the injection moulding system according to the present invention the ejector actuation means are disposed on or within the stationary mould half. In prior art systems, the ejector rod is usually received, and reciprocates in, apertures in the movable platen and respective mounting plates. The actuator mechanism in prior art systems is accordingly located behind the movable platen as viewed from the mould halves. In contrast, the ejector actuation means according to this embodiment of the present invention are attached to the stationary mould half. This has the major advantage that the stationary platen and/or the mould mounting means do not require any machining or other modifications for receiving actuator rods, pistons or the like. Existing injection moulding systems may therefore be conveniently adapted to result in systems that lie within the scope of this embodiment. The ejector actuation means, which may include hydraulic, pneumatic, electric and/or electro-magnetic actuation may advantageously be disposed on, or close to, one or more edges of the mould. This ensures minimum interference with injection moulding process steps like the mould clamping mechanism or melt injection. The ejector actuation means may be attached to the mould half by means of clamps, fasteners, brackets, screwed connection, combinations thereof, or any other mounting means well known in the art. Furthermore, it is conceivable that the ejector actuation means are disposed within the stationary mould, where they could be received in suitable apertures or the like.

According to another embodiment of the injection moulding system of the present invention the ejector actuation means comprise at least one working cylinder mounted to the stationary mould half, wherein each cylinder comprises a piston rod disposed within the cylinder, each piston rod having one end that protrudes from its respective cylinder, wherein said end is fixed to the ejector plate. This is an advantageous arrangement that ensures minimum interference with other system parts and process steps. The piston rod is directly connected to the ejector plate, which is thus reciprocated by the linear stroke of a working cylinder. The working cylinder may be a hydraulic or pneumatic cylinder. Any type of hydraulically or pneumatically actuatable cylinder may be used, including length adjustable cylinders and/or piston rods.

In an expedient embodiment of the present invention the ejector actuation means comprise two working cylinders, which are disposed on respective opposing edges of the stationary mould half. Here, again the cylinders' piston rods each have a protruding end which is fixed to the ejector plate. Preferably, the mounting points on the ejector plate are chosen on, or close to, two opposing edges of the plate. This will contribute to a smooth and uniform reciprocation of the ejector plate.

According to a preferred embodiment of the injection moulding system of the present invention the mounting means for fixing the stationary mould half to the stationary platen comprise two bar-shaped elements arranged at a first set of respective opposing edges of the mould half, wherein the ejector actuation means comprise two working cylinders, which are disposed on a second set of respective opposing edges of the stationary mould half, wherein the first set of respective opposing edges is different from the second set of respective opposing edges. The mould half will often have a substantially quadrangular cross section. Consequently, the mould half will usually have four edges with two sets of opposing edges. According to the present embodiment a first cylinder will be disposed on, or close to, one of the two opposing edges of the first set, while the second cylinder will be disposed on, or close to, the respective other edge of the first set. Furthermore, a first bar-shaped element will be arranged at, or close to, one of the two opposing edges of the second set, while the second bar-shaped element will be arranged at, or close to, the respective other edge of the second set. This arrangement is particularly space-efficient and economical. Existing injection moulding systems may therefore be conveniently adapted to result in systems that lie within the scope of this embodiment.

In another embodiment of the present invention there is provided a method for ejecting moulded articles from at least one mould cavity formed at least by a movable mould half and a stationary mould half of an injection moulding system according to the present invention, wherein the method comprises moving the ejector plate from a retracted position, in which each ejector pin tip is substantially flush with the cavity surface of the stationary mould half, to an ejecting position, in which each ejector pin at least partly protrudes from the cavity surface of the stationary mould half.

The present invention also relates to a method of manufacturing an ejector pin assembly for ejecting moulded parts from a mould of an injection-moulding apparatus.

Exact positioning of the ejector pins is critical for moulding and removing the moulded article without damage, deformation or other major visual traces. The ejector pin assembly protruding from the ejector plate needs to be precisely adapted to the mould and its cavity shape. This is complicated by the fact that the process of injection moulding typically requires frequent mould changes. Consequently, ejector pin assemblies need to be custom-shaped and adapted to the respective mould at hand. Also, the dimensions and the design of the pins largely depend on the shape of the moulded article as well as on the structural properties of the melt. Therefore, the manufacture of custom-built ejector pin assemblies is often an expensive and time-consuming process contributing greatly to production costs.

Traditionally, the manufacturing of ejector pin assemblies comprises the use of pins which have a flange portion at their rear end. The flange portion, which is also known as the pin's head, is usually clamped between the retainer plate and the ejector plate. The pins extend through properly aligned apertures machined into the retainer plate. Thus, the flange portion is enclosed between the two plates, which are usually bolted or screwed together for keeping the flange portion in place. The same technique may be applied for fixing ejector return pins and/or a sprue puller pin between the two plates. An example of this may be found in U.S. Patent No. 5916603.

The above-discussed traditional approach to manufacturing of ejector pin assemblies entails the necessity for laborious tool making efforts, including the drilling of through holes into the retainer plate with a diameter that is larger than the diameter of the ejector pins as well as drilling of counter bores for receiving the flange portions or the pin heads. Furthermore the manufacturing of bolt connections is required. Essentially all of the afore-mentioned steps are irreversible. Consequently, misplacement or incorrect dimensioning of the apertures requires the manufacturing of an entirely new part. This increases production costs especially if high quality materials, such as chromium containing die steels are used.

Japanese Patent Application No. 60068913 discloses an ejector pin push mechanism where an ejector pin is attached to a single ejector plate by adhesively bonding the circular bottom surface of the cylindrical pinhead to the plate. Accordingly, the flange at the pinhead serves no other purpose than simply increasing the adhesively bonded surface of the pin. This construction may be unstable and prone to detachment of pins, especially when undesired friction between the pin and the aperture in the mould half occurs during operation.

Thus, it is a fifth aspect of the present invention to provide a method of manufacturing an ejector pin assembly that allows for easy and flexible placement of ejector pins on an ejector plate.

It is a sixth aspect of the present invention to provide a method of manufacturing an ejector pin assembly that is cost-effective.

It is a seventh aspect of the present invention to provide a method of manufacturing an ejector pin assembly that results in a firm and secure connection between one or more ejector pins and an ejector plate.

It is a eighth aspect of the present invention to provide a method of manufacturing an ejector pin assembly that is easily adapted to moulds and cavities of different shapes and dimensions.

The new and unique way in which the present invention fulfils one or more of the above-mentioned aspects is to provide a method of manufacturing an ejector pin assembly for ejecting moulded articles from a mould of an injection-moulding apparatus, the method comprising the steps of providing at least one ejector pin comprising a shaft with a flange portion at a lower end and a tip at an upper end, the flange portion comprising a bottom surface, a side surface and a top surface, providing a mould half comprising at least one aperture allowing for axial movement of the shaft therethrough, providing an ejector plate for attaching the at least one ejector pin thereto, aligning the mould half, the at least one ejector pin and the ejector plate in such a way that each pin is at least partly received in its respective aperture within the mould half, and that the bottom surface of the flange portion abuts against an attachment surface of the ejector plate, applying a layer of a viscous adhesive to the attachment surface of the ejector plate to such an extent that the layer extends from the attachment surface to beyond the top surface of the flange portion of each pin.

Typically, the ejector pin assembly of the present invention will comprise several ejector pins which may be made of stainless steel, chrome-plated steel or any other suitable material well known in the art. The pins may be coated with nitride. The flange portion at the pin's lower end may be forged. The flange portion will typically have a cylindrical shape with a circular cross section and a circular edge. However, other cross-sectional shapes of the flange portion are possible, for example semi-circular or quadrangular. The bottom surface of the flange portion is the surface furthest from the tip, while the top surface lies in a plane substantially parallel to the bottom surface, but closer to the tip. The side surface connects the flange portion's bottom and top surface, thereby defining the thickness of the flange portion.

The mould half will typically comprise one or more apertures extending from the mould half's outer to its inner surface, that is, from the surface which during operation faces a support plate or the like, to the surface that makes up at least part of the cavity in which the article is moulded, i.e. the cavity surface. The ejector pin is axially movable from a retracted position, where the tip is substantially flush with the cavity surface, to an ejecting position where the tip protrudes from the cavity surface so that the ejector pin separates the moulded article from the cavity surface. The ejector plate may be made of stainless steel or any other suitable material well known in the art.

Alignment of the mould half, the ejector pins and the ejector plate may be achieved by a jack or similar lifting equipment for placing the mould half at a given distance above the ejector plate. The ejector plate's attachment surface, to which the pins are to be attached, will typically be parallel to the outer mould half surface facing the ejector plate. However, other arrangements are conceivable. The tips of the ejector pins may be manually inserted into the apertures of the mould half from below, that is, from the side that is facing the ejector plate surface. The mould half's position may then be height-adjusted to avoid unwanted relocation of the pins. Correct alignment is achieved when the bottom surface of each pin's flange portion flatly abuts against the attachment surface of the ejector plate. The alignment step according to the present invention is not limited to arrangements in which the mould half is placed above the ejector plate. Other arrangements are conceivable and may be more suitable for a given situation.

A layer of a viscous adhesive is then applied to the attachment surface of the ejector plate. Any suitable natural or synthetic adhesive may be used, provided it ensures a tight and safe connection between the pins and the ejector plates during operation of the injection moulding system. The adhesive may be a two-component adhesive, a thermal adhesive or the like. A firm connection is achieved by providing the adhesive in a layer extending from the attachment surface of the ejector plate to beyond the top surface of the pins' flange portions. Upon hardening of the adhesive, the flange will thereby contribute to resisting axial forces acting in a direction away from the ejector plate. Prior to hardening of the adhesive, the position and orientation of the pins may be adjusted and corrected, which is a major advantage over the prior art.

The attachment surface of the ejector plate will typically be a flat, quadrangular top surface of the plate. The adhesive layer may cover the attachment surface in its entirety. In another embodiment only a part of the ejector plate's attachment surface is covered. Advantageously, the entire top surface of any flange portion is covered with the adhesive layer. In another embodiment the attachment surface may be treated prior to application of the adhesive layer. Surface roughening is one example of a possible treatment.

In a preferred embodiment of the method according to the present invention the adhesive layer completely covers the attachment surface of the ejector plate. The adhesive layer will in this case extend at least to the edges delimiting the attachment surface of the ejector plate. This may be achieved by using a frame enclosing these edges and projecting above the attachment surface. The frame may then be filled with the viscous adhesive to obtain the adhesive layer. The fill level will depend on the position of the top surfaces of the flange portions of the respective pins. Manufacturing the layer in this way will increase the overall resilience and stability of the ejector pin assembly. A tight connection between the adhesive layer and the attachment surface is achieved.

In another embodiment of the method according to the present invention the tip of at least one ejector pin is bevelled. This may be required where the moulded article's engagement surface, which is the surface that is contacted by one or more pin tips, has an orientation that is not perpendicular to the movement of the ejector plate. In these situations, an ordinary flat pin tip would result in unequal pressure distribution entailing unwanted indentations on the article surface. Here, the tip of the pin is adapted to the shape and orientation of the article's engagement surface.

According to another embodiment of the method of the present invention the flange portion of the at least one pin has a cross section with at least one linear edge. An example of this would be a semicircular or a quadrangular cross section. Alternatively, any partly circular cross section limited by at least one linear crop is conceivable. As compared to a purely circular cross section the linear edge of this embodiment contributes to minimizing rotational movement of the pin around its longitudinal axis during manufacture and operation of the pin assembly. A circular cross section may result in said rotational movement if the contact adhesion between the adhesive layer and the flange portion is not optimal. In this case, the flange portion may rotate in its hardened cavity within the adhesive layer. This is especially undesirable wherever bevelled or chamfered pin tips or otherwise asymmetrical tips are used. Correct rotational orientation of this type of pins is obviously critical for smooth operation of the ejector system and for minimising pin marks on the moulded article. When provided with a linear edge the flange portion will resist rotational movement around the pins longitudinal axis owing to the flange portion's linear edge, even if there is insufficient adhesion between the adhesive layer and the flange portion. The hardened adhesive layer will comprise a negative of said linear edge, which will abut the flange portion's linear edge, regardless of the degree of adhesion between both edges.

In a preferred embodiment of the method according to the present invention the adhesive is an epoxy resin. The epoxy resin may be cured by heat, at room temperature, or by exposure to ultraviolet light. The resin may be produced from a reaction of two components.

In yet another embodiment of the present invention the above method is also used for fixing one or more ejector return pins and/or one or more sprue puller pins to an ejector plate.

The present invention also relates to an angular ejector system for ejecting moulded articles from the mould of an injection moulding system. Furthermore, the present invention relates to a method for ejecting moulded articles from at least one mould half of an injection moulding system by using the angular ejector system according to the present invention.

It is often desirable to eject moulded articles with ejector pins that move angularly with respect to the axis along which the movable mould half reciprocates. This is especially true for articles that have a complex geometry which complicates parallel ejection. By means of angular ejection, flexible articles may be bent and opened outwardly, which may facilitate separation of the article from the mould.

Angular ejection is a challenge when working with traditional ejection systems, since ejector plates usually travel axially, that is, in a direction parallel to the clamping direction of the mould halves. When ejector pins are angularly arranged on this type of systems certain considerations and modifications need to be made to permit smooth operation and safe travel of the pins within their angular paths.

U.S. Patent No. 4,588,095 discloses an arrangement in which two angular ejector pins are mounted on an axially moving ejector plate. The pins are received in angular paths formed in a retainer block. The heads of the ejector pins need to be secured in T-bushings, which are fitted into the ejector/retainer plate and which permit vertical travel of the heads for enabling angular movement of the pins.

Other known approaches comprise the use of special apertures for receiving the angular ejector pins, wherein the apertures have a large clearance for permitting travel of the pins. Alternatively, arrangements are conceivable in which the ejector plate does in fact not move axially but parallel to the orientation of the angular pins.

All of the above arrangements require repeated modification of the ejector system of an injection moulding machine as mould halves are changed. The ejector plate assembly needs to be adapted to the specific moulding cavity and its orientations. Thus, not only the mould halves need to be changed but also the ejection system. This is time-consuming, tedious and costly. It would be more convenient and more cost-effective to devise an arrangement that allows for angular ejection of articles, but which is compatible with prior art ejection systems.

Thus, it is a ninth aspect of the present invention to provide an angular ejector system that is compatible with existing injection moulding machines, thus obviating the need for extensive and/or irreversible modifications of known ejection systems.

It is a tenth aspect of the present invention to provide an angular ejector system that allows for precise, reproducible and controlled ejection of moulded articles.

It is an eleventh aspect of the present invention to provide an angular ejector system, which is easily and cost-effectively adaptable to various different moulds.

The new and unique way in which the present invention fulfils one or more of the above-mentioned aspects is to provide an angular ejector system for ejecting a moulded article from a mould half of an injection moulding system, the ejector system comprising a mould half comprising a cavity surface which at least partly constitutes a boundary of a mould cavity for moulding articles therein, at least one aperture formed within the mould half, the aperture having an angular orientation with respect to a mould clamping direction of the injection moulding system, at least one detached ejector pin comprising a shaft with a head portion at a lower end and a front portion with a tip at an upper end, the ejector pin being movably disposed within the aperture, actuation means for moving each detached ejector pin from a retracted position, in which the tip is substantially flush with the cavity surface of the mould half, to an ejecting position, in which the detached ejector pin at least partly protrudes from the cavity surface of the mould half, and return means for returning each detached ejector pin from its ejecting position to its retracted position.

As used herein, the term "mould clamping direction" refers to the direction in which the mould halves of the injection moulding system are clamped together and are opened. The movable platen usually rides on a set of parallel tie bars which are oriented parallel to the mould clamping direction. Accordingly, an angular orientation with respect to the mould clamping direction is any orientation forming an angle with said direction, e.g. an aperture upwardly inclined by 30° relative to the axis along which the movable platen moves. This is also how the term "angular ejector system" should be interpreted. An angular ejector system according to the present invention will have one or more apertures formed in at least one mould half, wherein the apertures have an angular orientation with respect to the mould clamping direction. The terms "angular movement" and "parallel movement" are also to be understood in relation to the mould clamping direction, unless indicated otherwise.

The mould half containing an angular aperture will comprise a cavity surface, which is a surface which at least partly constitutes a mould cavity for moulding articles therein. Said cavity surface may be concave, arched, or the like. The mould half will typically be the moving mould half of the injection moulding system. Alternatively, the mould half comprising one or more angular apertures according to the present invention may be the stationary mould half.

The shape of the apertures will advantageously be cylindrical. However, other shapes are conceivable, for example apertures with a quadrangular or tapered cross section. The apertures may have a cross section which is not constant over the length of the aperture. This includes counter bores, shouldered portions or the like. Usually, each aperture will connect the cavity surface with an outside surface of the mould half, however, this is no requirement.

As used herein, the term "detached ejector pin" refers to an ejector pin that is not physically attached to an ejector plate or the like. In being detached, the entire ejector pin may be disposed within the aperture of the mould half without any portions of the pin protruding outwardly or being fixed to parts outside the mould half. The detached ejector pin may be actuated to a position where it protrudes from a surface of the mould half.

Each ejector pin has a head portion, which may be a formed as a flange, or which simply may be an end of a cylindrical pin. Similarly, each pin has a front portion with a tip, where the tip may be formed as a flat or bevelled surface. Each pin is movably disposed within its respective aperture. This may advantageously be achieved by apertures having a slightly larger diameter than the diameter of the pins. Each aperture may have one or more shoulders formed therein for preventing movement of the pin beyond a pre-determined point. This may be achieved by using pins with a flanged head portion abutting the aperture's shoulder in a given position. Similarly, the front portion of one or more tips may be flanged, that is to say, may have a larger diameter than the shaft, for preventing movement of the pin in another direction.

The actuation means for moving the ejector pin from a retracted to an ejecting position may include a conventional ejector plate assembly, pressurized air or liquid, or any other suitable means known in the art. In its retracted position each ejector pin is completely retained within the mould half, that is, the pin is detached as outlined above. In its ejecting position each ejector pin at least partly protrudes from the cavity surface of the stationary mould half for ejecting a moulded article from the mould half. Typically, the tip and a short distance of the pin's shaft will extend beyond the cavity surface in this position.

The return means returning one or more pins to their respective retracted positions will advantageously be independent of the actuation means. This embodiment implies that the actuation means are not used for actively withdrawing or pulling the pin. This obviates the need for hooking or coupling means between the actuation means and the pinhead.

In a preferred embodiment, the return means comprise a compressible spring for biasing the detached ejector pin towards its retracted position. The compressible spring, which may be a conventional helical spring, will advantageously be disposed between a flanged head portion of the pin and a shoulder formed within the aperture receiving the pin.

According to one embodiment of the angular ejector system of the present invention the actuation means comprise a movable ejector plate with one or more attached ejector pins fixed to the ejector plate for engaging the respective head portions of one or more detached ejector pins. Advantageously, the tip of each attached ejector pin is bevelled for abutting and engaging a complementarily bevelled end surface of the head portion of each respective detached ejector pin. Thereby, the parallel movement of the ejector plate translates into a movement of the detached ejector pins which is angular with respect to the direction of said parallel movement. This offers a convenient and cost-effective solution, since conventional ejector plate assemblies of existing injection moulding system may be used to this end. No or only minimal modifications need to be made to the standard components of the system, since the major modifications are confined to the mould half which is usually custom-designed and machined anyway. These modifications include machining of the apertures, placement of the detached pins and arrangement of the return means.

In another embodiment of the angular ejector system according to the present invention, the actuation means comprise pressurized air or liquid which is injected into one or more apertures for engaging the respective head portions of one or more detached ejector pins. Advantageously, known ejection systems using air or fluid under pressure may be employed in this respect. An additional channel or aperture formed within the mould half and connecting to one or more angular, detached-pin-receiving channels may be used for directing the pressurized air or fluid towards the head portion of the ejector pins. Alternatively, pressurized air or fluid may be directly injected into the detached-pin-receiving channels.

The angular ejector system according to the present invention may advantageously be used in a method for ejecting moulded articles from at least one mould half of an injection moulding system. This method has a high adaptability and is cost-efficient when compared with known angular ejection methods in injection moulding.

The present invention also relates to an injection moulding system comprising the angular ejector system according to the present invention.

The present invention also relates to an injection moulding system with a unique placement and actuation of an ejector system according to the present invention, wherein the injection moulding system further comprises an angular ejector system according to the present invention. This combination combines the advantages of both systems, thereby greatly reducing costs and increasing flexibility.

The invention will be explained in greater detail below where further advantageous properties and example embodiments are described with reference to the drawing, in which
Fig. 1 shows a schematic side elevational view of a known injection-moulding machine,
Fig. 1a shows a schematic cross sectional view of the mould shown in Fig. 1,
Fig. 2 shows a perspective drawing of an assembly representing relevant parts of an injection moulding system according to the present invention,
Fig. 3 shows an exploded side elevational view of the assembly of Fig. 2,
Fig. 4 shows a vertical cross sectional view of an assembly similar to the one of Fig. 2, where the ejector plate is shown in a retracted position,
Fig. 5 shows a vertical cross sectional view of an assembly similar to the one of Fig. 2, where the ejector plate is shown in an ejecting position,
Fig. 6 shows a cross sectional view of the mould half, the cylinders, and the cylinder attachment means, as cut along the line VIII in Fig. 3,
Fig. 7 shows a schematic cross section of relevant components for manufacturing of an ejector pin assembly according to the present invention,
Figs. 8 and 9 show the components of Fig. 7 in an aligned position,
Fig. 10 shows a cross section of an ejector pin assembly according to the present invention,
Fig. 11 shows a schematic cross section of relevant components for manufacturing an ejector pin assembly according to another embodiment the present invention,
Fig. 12 shows a perspective view of relevant components for manufacturing an ejector pin assembly according to another embodiment the present invention,
Fig. 13 shows a cross section through one of the flange portions shown in Fig. 12,
Fig. 14 shows a cross sectional view of relevant parts of an injection moulding system comprising an angular ejector system of the present invention, where the detached ejector pin is in a retracted position,
Fig. 15 shows a cross sectional view of relevant parts of an injection moulding system comprising an angular ejector system of the present invention, where the detached ejector pin is in an ejecting position,
Fig. 16 shows a cross sectional exploded view of relevant parts of an injection moulding system comprising an angular ejector system according to another embodiment of the present invention, and
Fig. 17 shows a cross sectional assembled view of the parts depicted in Fig. 16, wherein the detached ejector pin is in a retracted position.

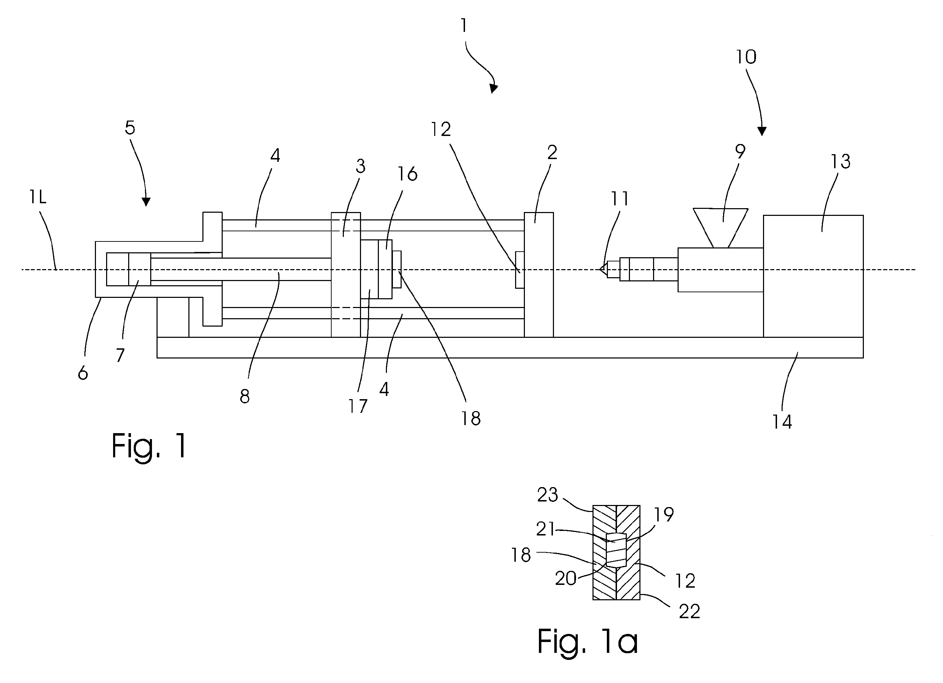

Fig. 1 shows schematically the fundamental construction of a known injection-moulding system 1, which comprises a stationary platen 2 and a movable platen 3 slidingly mounted on four tie bars 4 of which only two can be seen in the figure. For this purpose close fitting bushings (not shown) are provided in the corners of the movable platen 3. A stationary mould half 12 is mounted to the stationary platen 2, while a movable mould half 18 is mounted to the movable platen 3 via a support plate 16 and two spacer blocks 17, of which only one can be seen in Fig. 1. An ejector plate assembly (not shown) is often disposed within a clearance bordered by the movable platen 3, the support plate 16 and the spacer blocks 17. As seen in Fig. 1a the mould halves 12, 18 together form a mould cavity 21 for moulding an article (not shown). Each mould half has a cavity surface 19, 20, which together define the boundary of the mould cavity 21. Each mould half 12, 18 has an outer surface 22, 23 which faces the respective platens 2, 3. For the sake of illustration, other elements potentially defining part of the mould cavity, such as the tips of ejector pins or side cores, are omitted.

Clamping means 5 are provided for sliding the movable platen 3 on the bars toward and away from the stationary platen 2. The clamping means comprise a hydraulic cylinder 6 with a piston 7 and a piston rod 8. Sliding of the movable platen 3 and movement of the ejector plate assembly is typically an axial movement along the axis 1L, which is equal to the clamping direction.

An injection system is generally indicated by the reference numeral 10. A hopper 9 is adapted to receive solid polymers (not shown), which are preferably supplied in granulated form. During operation the polymer granulate is fed into an injector for injecting the plastic into a closed mould 12, 18 through a nozzle 11. The injector may e.g. be a screw or ram injector surrounded by a heating means, such as an electrical heating coil for melting the plastic prior to injection.

Additional equipment, e.g. controlling implements (not shown) of the injection-moulding machine, is contained in a schematically shown housing 13. The machine is resting on a floor (not shown) by means of a base frame 14.

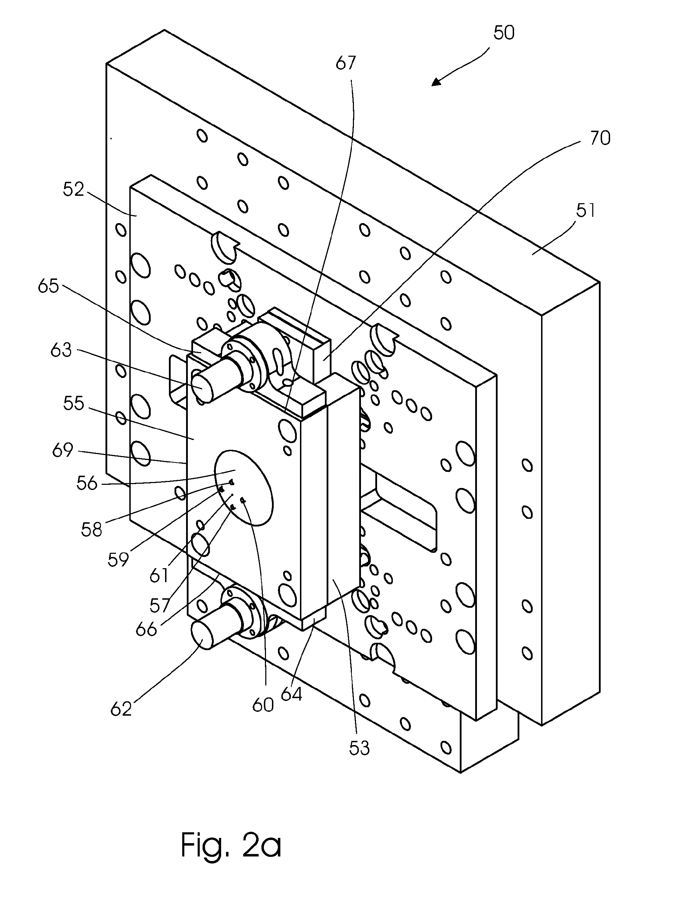

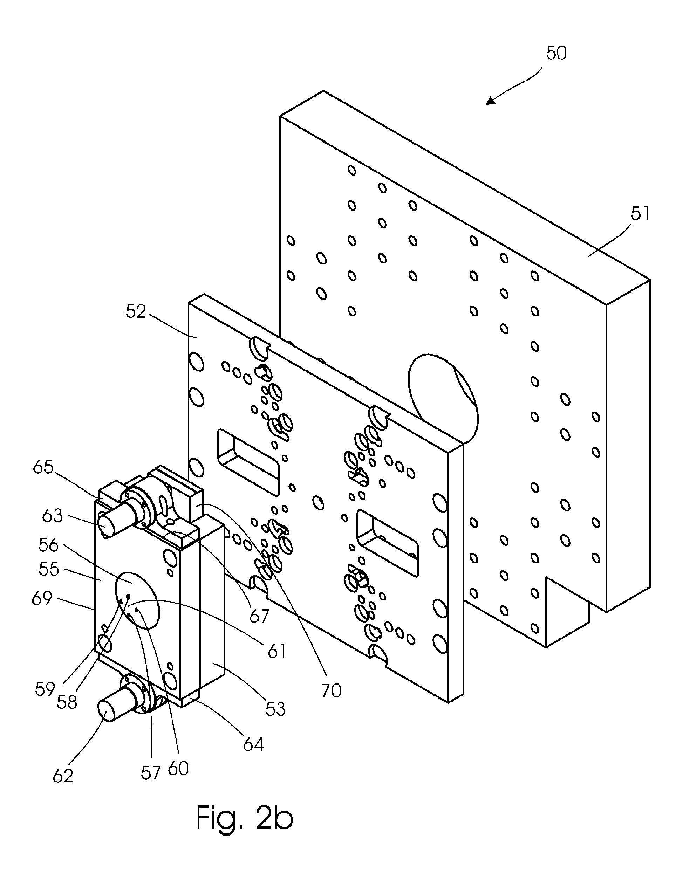

Fig. 2 shows an assembly 50 comprising relevant parts of an injection moulding system according to the present invention. To a stationary platen 51 is mounted a support plate 52, to which are attached two vertically oriented bar-shaped elements 53, 54, of which only one can be seen in Fig. 2. The bar-shaped elements 53, 54 carry the stationary mould half 55. The aforementioned elements are preferably detachably connected by any suitable method known in the art, for example screw connections or the like. The stationary mould half comprises a cavity surface 56 which constitutes part of the surface making up the overall moulding cavity. For illustrative purposes the movable side of the injection moulding system is omitted from the Fig. 2. The cavity surface 56 bulges outwardly towards the not-shown movable tool half. Accordingly, the stationary mould half 55 constitutes the male mould half. The moulded article will shrink around, and stick to, the stationary mould half 55.

Fig. 2 furthermore shows the ends of four apertures 57, 58, 59, 60 within the mould half for receiving the ejector pins (not shown). An inlet opening 61 is centrally arranged in the stationary mould half for receiving melt from an injection unit. Two working cylinders 62, 63 are mounted to the stationary mould half 55 by respective retaining brackets 64, 65, which may be screwed to the mould half 55. The cylinders 62, 63 are fixed to respective opposing edges 66, 67 of the mould half 55. Similarly, bar-shaped elements 53, 54 are fixed to, or close to, the two remaining respective opposing edges 68, 69 of the mould half 55. The cylinders 62, 63 each comprise a piston rod connecting to an ejector plate 70, for example by using a retainer plate. The ejector plate 70 is allowed to reciprocate between two positions by the action of the cylinders 62, 63 as will be seen in the following.

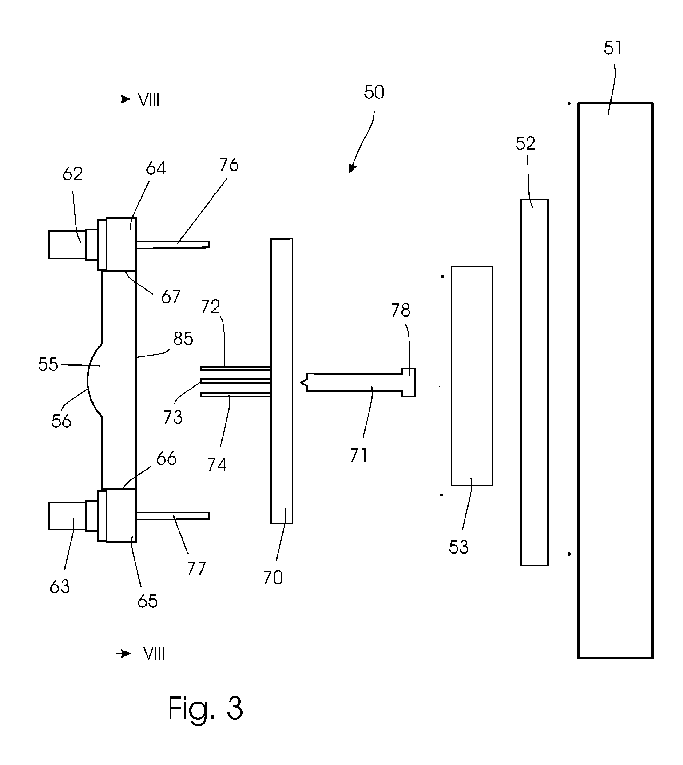

Fig. 3 shows an exploded side elevational view of relevant parts of an injection moulding system according to the present invention. As in all figures, the same reference numerals denote the same or corresponding parts. Elements that are conveniently seen in Fig. 3 include the ejector plate 70 to which are attached ejector pins 72, 73, 74. A fourth ejector pin is present according to this embodiment, but cannot be seen since it is flush with pin 73 in this perspective. The pins 72, 73, 74, 75 may be fastened to the ejector plate 70 in any suitable manner, for example by using a retainer plate bolted to the ejector plate 70. Although, the pins' tips are depicted as being flat they may just as well be chamfered or have any other suitable shape.

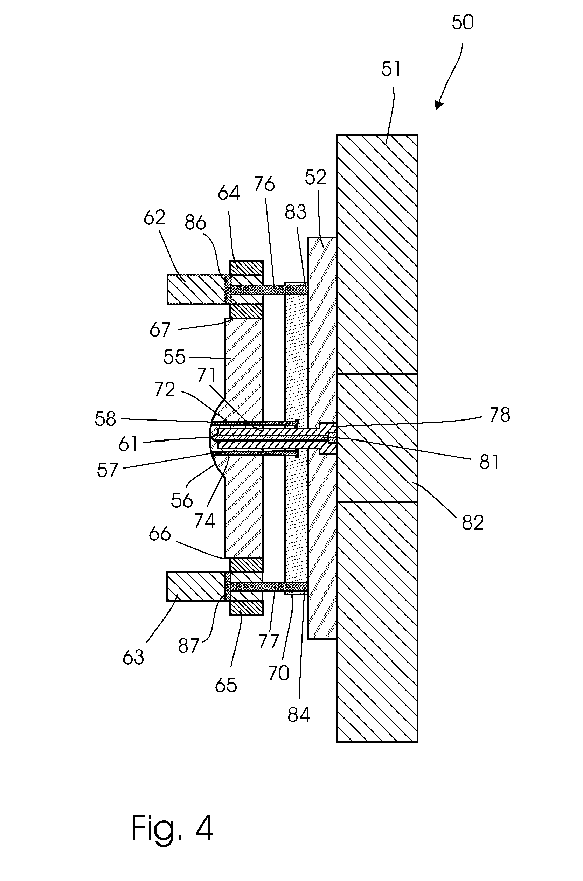

In the assembled state, the pins 72, 73, 74, 75 surround a sprue bushing 71, which is received in apertures formed within the support plate 52, the ejector plate 70 and the mould half 55, as is best seen in Fig. 4. The sprue bushing comprises a flanged head portion 78 which may be received in a counter bore formed within the support plate 52 as is best seen in Fig. 4.

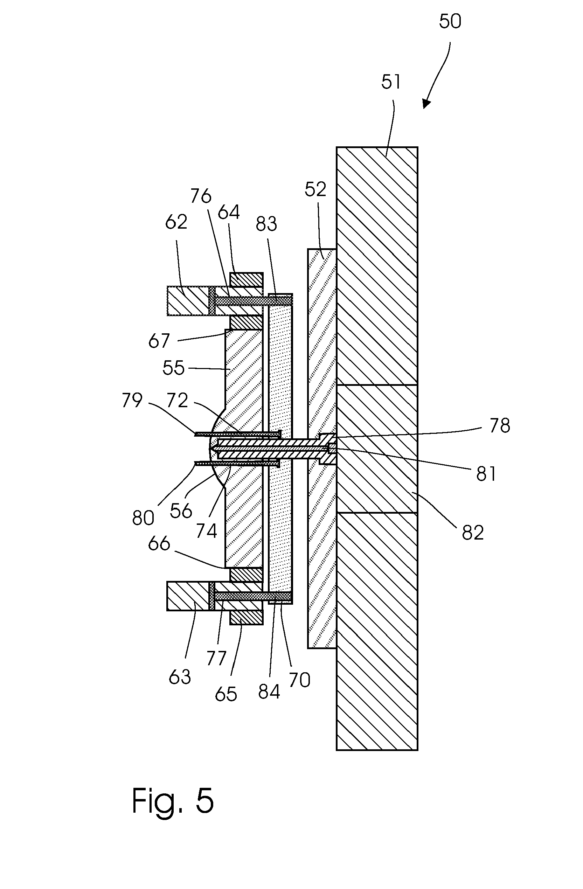

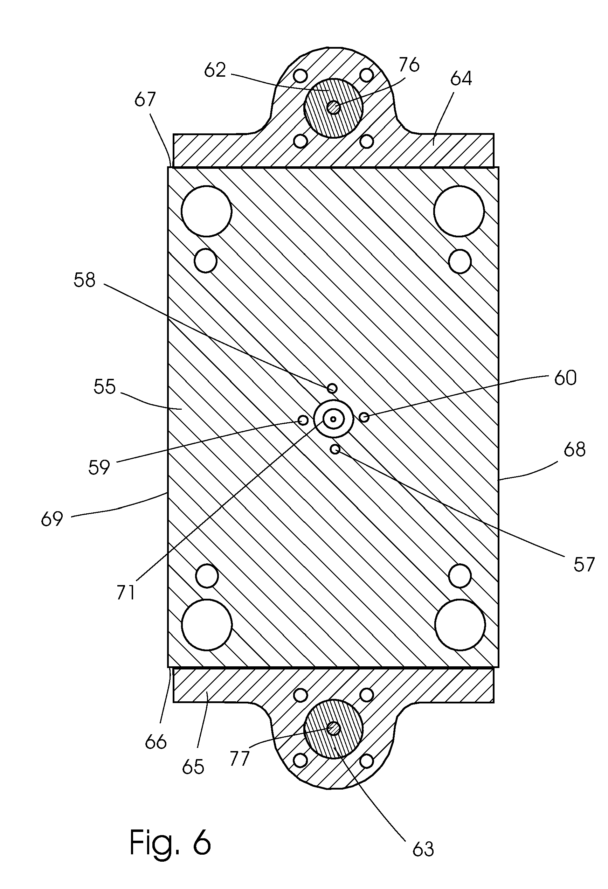

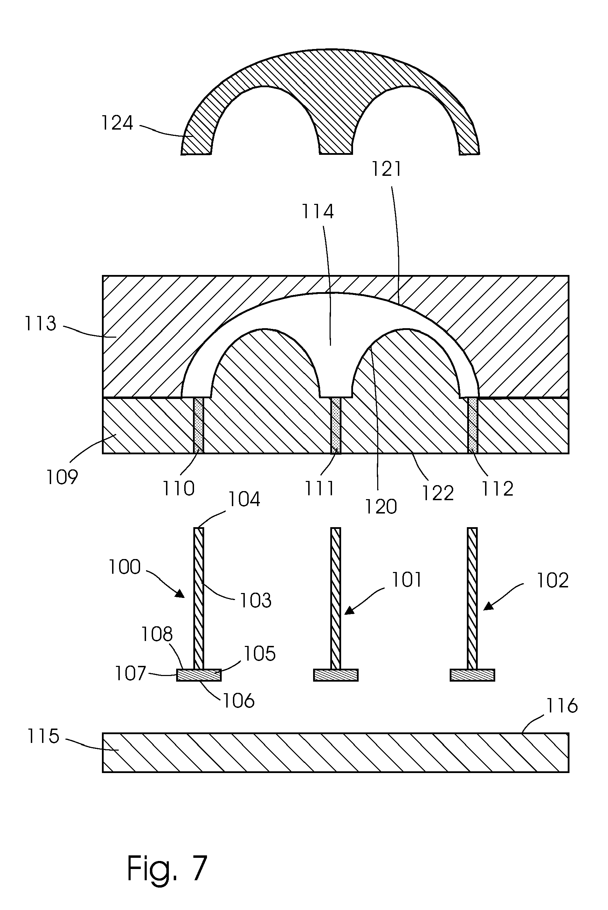

Figs. 4 and 5 show a cross sectional view of the assembly of Fig. 2. In Fig. 4 the ejector plate 70 is shown in a retracted position, while in Fig. 5 the ejector plate 70 is shown in an ejecting position. For the sake of illustration, the bar-shaped elements 53 are omitted from Figs. 6 and 7. The embodiment shown in Figs. 6 and 7 differs from the above-discussed embodiments in that the tips 79, 80 of the ejector pins 72, 74 are bevelled. This allows for an optimal engagement with the surface of the moulded article. An injector nozzle of an injection unit (not shown) may access the sprue bushing 71 through a clearance 82 formed within the stationary platen 51. During operation, the melt will then be transferred through a channel 81 formed by the sprue bushing 71 and enter the mould cavity at the inlet opening 61 formed within the stationary mould half 55.

Two working cylinders 62, 63 are disposed on respective opposing edges 66, 67 of the mould half 55. Each piston rod 76, 77 has a respective end 83, 84 which is fixed to the ejector plate 70 for reciprocating the same between a retracted position as shown in Fig. 4 and an ejecting position as shown in Fig. 5. The other end of each piston rod 76, 77 is fixed to a respective piston 86, 87.

In Fig. 5 the ejector pins 72, 74 partly protrude from the cavity surface 56 of the mould half 55 so as to eject a moulded article from the mould half 55. While the ejector plate 70 does not abut the mould half 55 in its ejecting position according to the embodiment shown in Fig. 5, it lies within the scope of the present invention that the ejector plate 70 in fact may abut the mould half 55 in its ejecting position.

Fig. 6 shows a cross sectional view of the mould half 55, the actuator cylinders 62, 63 and the retaining brackets 64, 65. Here, it can easily be seen that the four apertures 57, 58, 59, 60 for receiving the ejector pins are concentrically arranged around the sprue bushing 71. Furthermore, it is conveniently seen that the retaining brackets 64, 65 are fixed to opposing edges 66, 67 of the mould half 55. When assembled, the bar-shaped elements 53, 54 will preferably be mounted to, or close to, the other set of opposing edges 68, 69 of the mould half 55. As used in this context, the term "close to" includes embodiments where the bar-shaped elements 53, 54 are mounted to the back surface 85 of the mould half 55 in close vicinity to the respective opposing edges 68, 69, for example less than 10 cm distanced from the respective edge. Said back surface 85 is shown in Fig. 3.

Both Fig. 2 and Fig. 6 show a number of additional apertures of circular cross section for receiving guide pins, tie bars, for fixing purposes or the like. These will not be further discussed since they are well known in the art, as are other standard parts of injection moulding machines not specifically mentioned herein.

It should be understood that the figures illustrate the invention by way of example, and not limitation. While the embodiments shown in the figures generally comprise four ejector pins and two working cylinders, any other number of said elements may be employed. It lies within the scope of the present invention that the ejector plate actuation means comprise only one working cylinder. Similarly, arrangements with only one ejector pin are conceivable. While the above-discussed figures generally show arrangements in which the apertures for receiving the ejector pins are regularly disposed around a sprue bushing this should not be construed as limiting the invention to such embodiments. The above description of the figures repeatedly refers to bar-shaped elements for receiving the mould half. While this shape is advantageous and preferred, it is self-evident that other shapes may be employed if expedient or required.

The cross section of Fig. 7 shows relevant components for manufacturing an ejector pin assembly 123 using the method of the present invention. In the embodiment shown, there are provided three ejector pins 100, 101, 102. As exemplarily shown for ejector pin 100, each pin comprises a shaft 103 with a flange portion 105 at a lower end and a tip 104 at an upper end. The flange portion 105 comprises a bottom surface 106, a side surface 107 and a top surface 108. Fig. 7 furthermore shows a first mould half 109 with three apertures 110, 111, 112 for receiving the pins 100, 101, 102 and for allowing for axial movement of the pins' shafts therethrough. For illustrative purposes, there is shown a second mould half 113 which, together with the first mould half 109, forms a cavity 114 in which an article is moulded. The cavity surfaces 120, 121 of the two mould halves 109, 113 form the boundary of the moulding cavity 114. The second mould half 113 is not necessarily needed for carrying out the method manufacturing an ejector pin assembly according to the present invention. For illustrative purposes, a cross section of the moulded article is shown at 124. An ejector plate 115 is provided for attaching the pins 100, 101, 102 to an attachment surface 116 on the same. The first mould half 109 comprises an outer surface 122 facing the ejector plate 115.

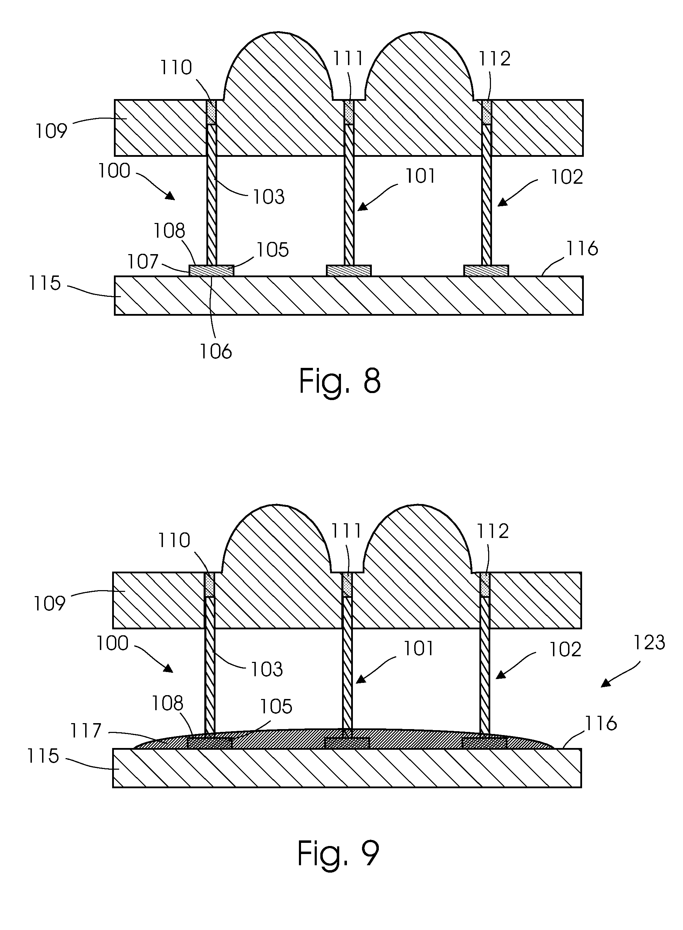

As seen in Fig. 8, the mould half 109, the ejector pins 100, 101, 102 and the ejector plate 115 are aligned in such a way that each pin 100, 101, 102 is at least partly received in its respective aperture 110, 111, 112 formed within the mould half 109. At the same time the bottom surface 106 of the flange portion 105 of each pin 100, 101, 102 abuts against the attachment surface 116 of the ejector plate 115, as is exemplified with reference numerals only for pin 100.

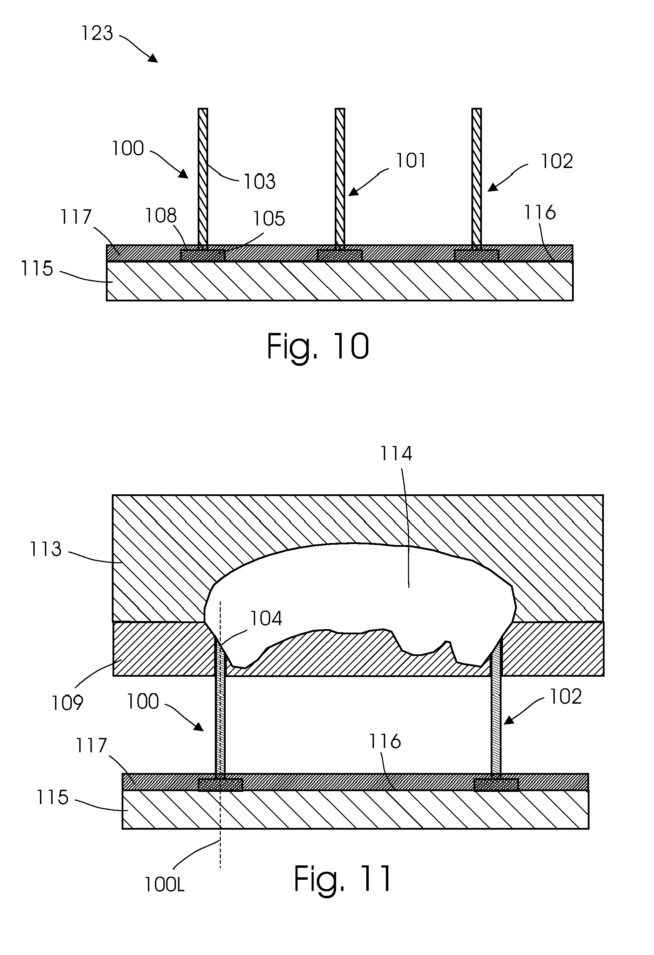

Fig. 9 shows a situation where a layer 117 of a viscous adhesive has been applied to the attachment surface 116 of the ejector plate 115 to such an extent that the layer 117 extends from the ejector plate's attachment surface 116 to beyond the top surface 108 of the respective flange portions 105 of the pins 100, 101, 102. In this embodiment the layer 117 does not completely cover the attachment surface 116 of the ejector plate, while according to the embodiment of the ejector pin assembly 123 shown in Fig. 10 the entire surface 116 of the ejector plate 115 is covered by the adhesive layer 117. This may be achieved by using frame assemblies or similar guiding means (not shown) to apply the adhesive to the surface 116 and for minimising spillage.

Fig. 11 shows another embodiment of an ejector pin assembly according to the present invention. Here the moulding cavity 114 formed between the mould halves 109, 113 necessitates the use of ejector pins 100, 102 with bevelled tips 104. When using bevelled tips it is often necessary to achieve a precise rotational orientation, that is to say prevent rotation of the pins around their respective longitudinal axis 100L. The latter is exemplarily shown for pin 100.

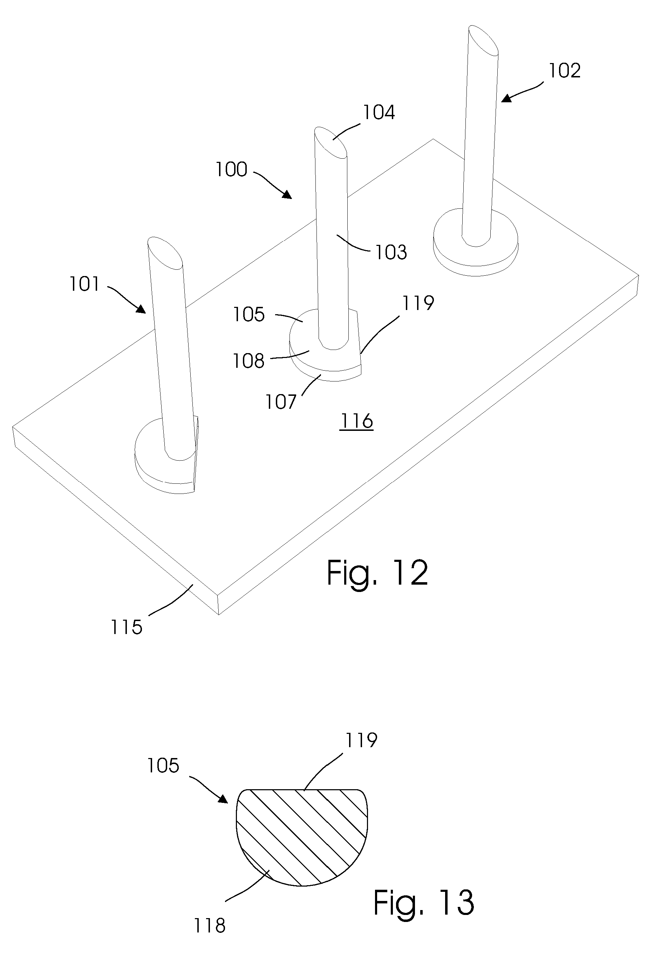

For minimising or preventing this rotational movement the method of the present invention provides an expedient solution. As shown in Figs. 12 and 13, two out of three ejector pins 100, 101, 102 have a flange portion 105 with a cross section 118 that has a linear edge 119. Fig. 13 shows a cross section 118 of the flange portion 105 in Fig. 12. When a layer of adhesive (not shown) is applied to the attachment surface 116 of Fig. 12 and is allowed to harden then the linear edge 119 will prevent rotational movement of the pin around its longitudinal axis, even is there is no perfect surface adhesion between the pin and the adhesive.

The embodiments shown in the figures are of exemplary nature and should not be understood as limiting the invention to the specific features or arrangements shown. Although the figures show several pins per ejector plate, other embodiments are conceivable in which only one pin is employed.

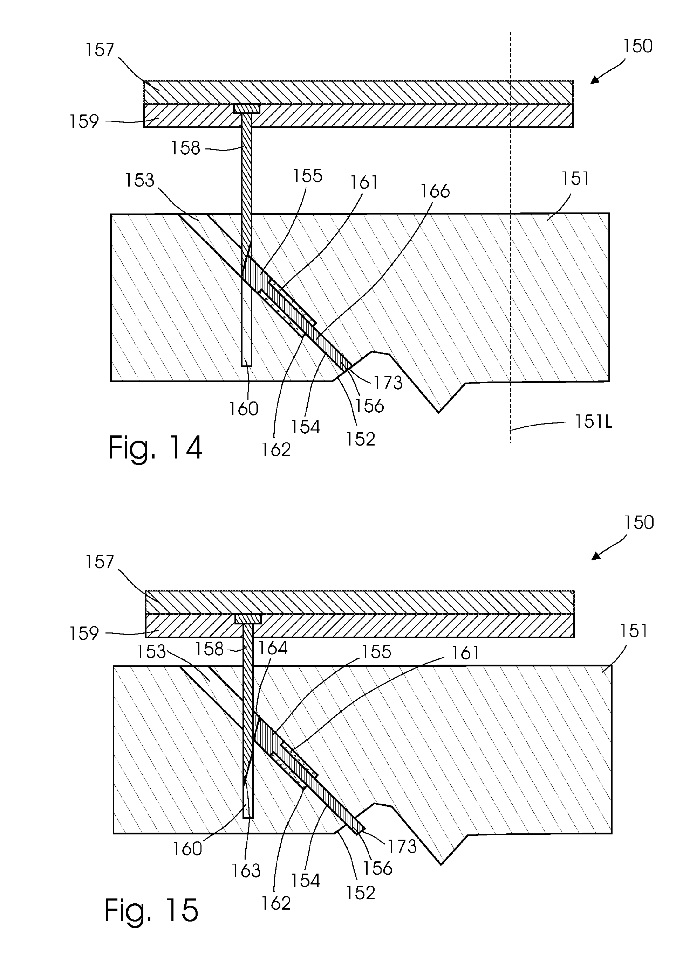

Fig. 14 shows a first embodiment of the angular ejector system 150 according to the present invention. A mould half 151 has a cavity surface 152 partly making up the boundary of a mould cavity (not shown). The other mould half is omitted for illustrative purposes. During operation of the injection moulding system, clamping and opening of the two mould halves takes place in a direction parallel to line 151L. Within the mould half 151 is formed an aperture 153 which has an angular orientation with respect to the mould clamping direction, that is with respect to line 151L. A detached ejector pin 154 is located within the aperture 153. The pin 154 has a shaft 166, a head portion 155 and a front portion 156 with a tip 173. Fig. 14 also shows an ejector plate 157 with an attached ejector pin 158 fastened thereto by means of a retainer plate 159. The attached ejector pin 158 is received in a non-angular aperture 160 formed in the mould half 151. The ejector plate 157 also moves parallel to line 151L when in use. A compressible spring 161 is arranged between the flanged head 155 and a shoulder 162 formed in the angular aperture 153 biasing the detached ejector pin 154 towards its retracted position as shown in Fig. 14.

Fig. 15 shows the same embodiment, however here the detached ejector pin 154 is depicted in its ejecting position. By the relative movement of ejector plate 157 from its position of Fig. 14 to its position of Fig. 15, the detached ejector pin 154 has been pushed towards the cavity surface 152 and now protrudes from the same to eject a moulded article (not shown) from the mould half 151. As seen both in Figs. 14 and 15, the tip 163 of the attached ejector pin 158 has a bevelled surface which may engage a complementarily bevelled surface 164 of the head portion 155 of the detached ejector pin 154. Thereby the non-angular movement of the ejector plate 157 is converted to an angular movement of the ejector pin 154.

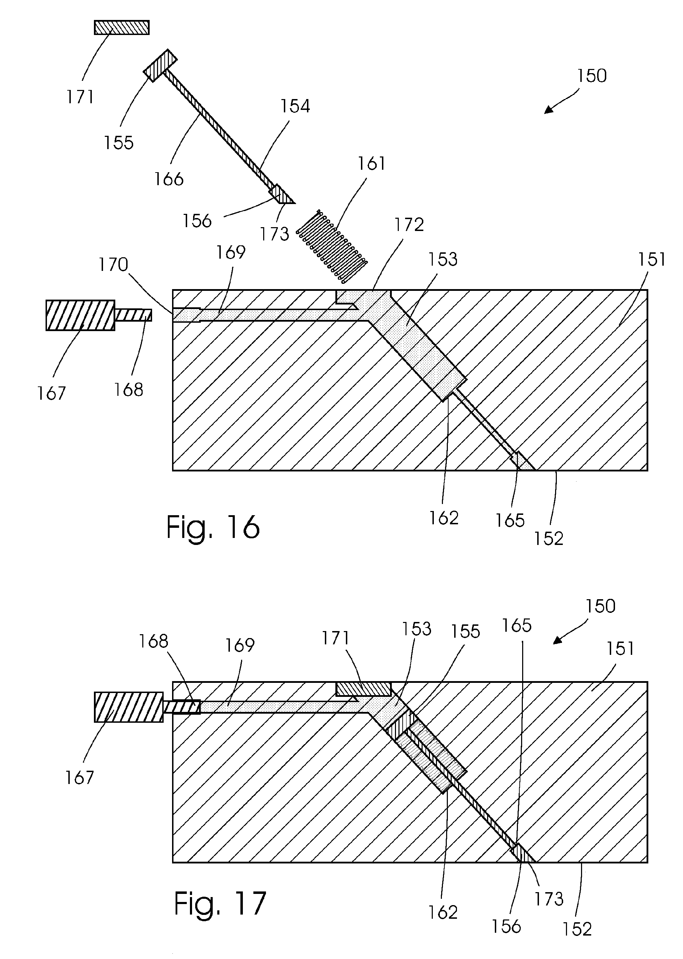

Figs. 16 and 17 show another embodiment of the angular ejector system 150 according to the present invention. As in all figures, the same reference numerals denote the same or corresponding parts. Within a mould half 151 is formed an angular aperture 153 comprising a first shoulder 162 and a second shoulder 165, which is best seen in the exploded view of Fig. 16. A cavity surface is schematically shown at 152. An injection aperture 169 branches from the angular aperture 153 and leads to a gas/liquid inlet 170. A detached ejector pin 154 is provided with a flanged head portion 155 and a front portion 156 with a tip 173, the front portion 156 having a larger diameter than the shaft 166 of the pin 154. For disposing the detached ejector pin 154 within the aperture 153, either the front portion 156 or the flanged head portion 155, or both, may be detached and re-assembled with the remainder of the pin 154.

This may, for example, be achieved by screwed connections (not shown).

An injection unit 167 for injecting pressurized gas or liquid comprises a nozzle 168 for injection into the gas/liquid inlet 170 of the injection aperture 169. A compressible spring 161 is disposed between the flanged head portion 155 of the ejector pin 154 and the first shoulder 162 of the angular aperture 153 as is seen in Fig. 17. A cap 171 is provided for closing the outward end 172 of the angular aperture 153. The cap 171 should provide a gas-tight closure of the outward end 172 and may, for example, be screwed into the outward end 172. For moving the ejector pin 154 into its ejecting position the cap 171 is fixed into place and the nozzle 168 of the injection unit 167 is inserted into the gas/liquid inlet 170 of the injection aperture 169. Pressurized gas or liquid is injected into the injection aperture 169 and travels into the angular aperture 153 for engaging the head portion 155 of the pin 154. The pin 154 is displaced to partly protrude from the cavity surface 152 similar to the situation shown in Fig. 15. In its retracted position, which is shown in Fig. 17, the enlarged front portion 156 of the pin 154 abuts the second shoulder 165 of the angular aperture 153. This arrangement prevents outward movement of the pin 154, that is, movement towards the outward end 172 of the angular aperture 153.

Again, it is emphasized that the embodiments shown in the figures exemplify the present invention and should not be understood as limiting the invention to the specific features or arrangements shown. The angular ejector system of the present invention may comprise several angular apertures and several detached ejector pins. Similarly, the ejector plate shown in Figs. 14 and 15 may comprise several ejector pins which each may engage a respective head portion of a detached pin disposed within the mould half.

## Claims

1. An injection moulding system (1) for producing moulded articles within at least one mould cavity (21) formed at least by a movable mould half (18) and a stationary mould half (55), the injection moulding system (1) comprising
- opposed stationary and movable platens (51, 3),
- a stationary mould half (55) fixed to the stationary platen (51)
- a movable mould half (18) fixed to the movable platen (3), each mould half being fixed to its respective platen (51, 3) by respective mounting means (52, 53, 54),
- each mould half comprising a respective cavity surface (20, 56) which at least partly constitutes a boundary of the mould cavity (21),
- at least one inlet opening (61) formed within at least one of the cavity surfaces (20, 56) for admitting moulding material into the mould cavity (21),
- an ejector system comprising one or more ejector pins (72, 73, 74, 75) fastened to at least one ejector plate (70), wherein each ejector pin has a tip (79, 80) for engaging and ejecting a moulded article from a mould half,
- ejector actuation means (62, 63) for reciprocating the ejector plate (70) between a retracted position and an ejecting position, **characterised in that**
- the ejector plate (70) is disposed between the stationary mould half (55) and the stationary platen (51) for reciprocating from the retracted position to the ejecting position,
- each ejector pin (72, 73, 74, 75) is arranged to reciprocate in apertures (57, 58, 59, 60) formed within the stationary mould half (55),
- each ejector pin tip (79, 80) is substantially flush with the cavity surface (56) of the stationary mould half (55) in the retracted position, and
- each ejector pin (72, 73, 74, 75) at least partly protrudes from the cavity surface (56) of the stationary mould half (55) in the ejecting position.

2. An injection moulding system (1) according to claim 1, **characterised in that** the ejector actuation means (62, 63) are disposed on or within the stationary mould half (55).

3. An injection moulding system (1) according to claim 2, **characterised in that** the ejector actuation means comprise at least one working cylinder (62, 63) mounted to the stationary mould half (55), wherein each cylinder (62, 63) comprises a piston rod (76, 77) disposed within the cylinder (62, 63), each piston rod (76, 77) having an end (83, 84) that protrudes from its respective cylinder (62, 63), wherein said end (83, 84) is fixed to the ejector plate (70).

4. An injection moulding system (1) according to claim 3, **characterised in that** the ejector actuation means (62, 63) comprise two working cylinders (62, 63), which are disposed on respective opposing edges (66, 67) of the stationary mould half (55).

5. An injection moulding system (1) according to any one of claims 1-4, **characterised in that** the mounting means for fixing the stationary mould half (55) to the stationary platen (51) comprise two bar-shaped elements (53, 54) arranged at a first set of respective opposing edges (68, 69) of the mould half, wherein the ejector actuation means (62, 63) comprise two working cylinders (62, 63), which are disposed on a second set of respective opposing edges (66, 67) of the stationary mould half (55), wherein the first set of respective opposing edges (68, 69) is different from the second set of respective opposing edges (66, 67).

6. A method for ejecting moulded articles from at least one mould cavity (21) formed at least by a movable mould half (18) and a stationary mould half (55) of an injection moulding system (1) according to any one of claims 1-5, wherein the method comprises moving the ejector plate (70) from a retracted position, in which each ejector pin tip (79, 80) is substantially flush with the cavity surface (56) of the stationary mould half (55), to an ejecting position, in which each ejector pin (72, 73, 74, 75) at least partly protrudes from the cavity surface (56) of the stationary mould half (55).

7. Method of manufacturing an ejector pin assembly (123) for ejecting moulded articles (124) from a mould of an injection-moulding apparatus, the method comprising the steps of
- providing at least one ejector pin (100, 101, 102) comprising a shaft (103) with a flange portion (105) at a lower end and a tip (104) at an upper end, the flange portion (105) comprising a bottom surface (106), a side surface (107) and a top surface (108),
- providing a mould half (109) comprising at least one aperture (110, 111, 112) allowing for axial movement of the shaft (103) therethrough,
- providing an ejector plate (115) for attaching the at least one ejector pin (100, 101, 102) thereto, **characterised in that** the method further comprises the steps of
- aligning the mould half (109), the at least one ejector pin (100, 101, 102) and the ejector plate (115) in such a way that each pin is at least partly received in its respective aperture (110, 111, 112) within the mould half (109), and that the bottom surface (106) of the flange portion (105) abuts against an attachment surface (116) of the ejector plate (115),
- applying a layer (117) of a viscous adhesive to the attachment surface (116) of the ejector plate (115) to such an extent that the layer (117) extends from the attachment surface (116) to beyond the top surface (108) of the flange portion (105) of each pin (100, 101, 102).

8. A method according to claim 7, **characterised in that** the adhesive layer (117) completely covers the attachment surface (116) of the ejector plate (115).

9. A method according to claims 7 or 8, **characterised in that** the tip (104) of at least one ejector pin (100, 101, 102) is bevelled.

10. A method according to any one of claims 7-9, **characterised in that** the flange portion (105) has a cross section (118) with at least one linear edge (119).

11. A method according to any one of claims 7-10, **characterised in that** the adhesive is an epoxy resin.

12. An ejector pin assembly (123) produced by the method according to any one of claims 7-11.

13. An injection moulding system (1) comprising the ejector pin assembly (123) according to claim 12.

14. An angular ejector system (150) for ejecting a moulded article from a mould half (151) of an injection moulding system (1), the ejector system comprising
- a mould half (151) comprising a cavity surface (152) which at least partly constitutes a boundary of a mould cavity (21) for moulding articles therein,
- at least one aperture (153) formed within the mould half (151), the aperture (153) having an angular orientation with respect to a mould clamping direction of the injection moulding system (1),
- at least one detached ejector pin (154) comprising a shaft (166) with a head portion (155) at a lower end and a front portion (156) with a tip (173) at an upper end, the ejector pin (154) being movably disposed within the aperture (153),
- actuation means for moving each detached ejector pin (154) from a retracted position, in which the tip (173) is substantially flush with the cavity surface (152) of the mould half (151), to an ejecting position, in which the detached ejector pin (154) at least partly protrudes from the cavity surface (152) of the mould half (151), and
- return means (161) for returning each detached ejector pin (154) from its ejecting position to its retracted position.

15. An angular ejector system (150) according to claim 14, **characterised in that** the return means comprise a compressible spring (161) for biasing the detached ejector pin (154) towards its retracted position.

16. An angular ejector system (150) according to claims 14 or 15, **characterised in that** the actuation means comprise a movable ejector plate (157) with one or more attached ejector pins (158) fixed to the ejector plate for engaging the respective head portions (155) of one or more detached ejector pins (154).

17. An angular ejector system (150) according to any one of claims 14-16, **characterised in that** the actuation means comprise pressurized air or liquid which is injected into one or more apertures (153) for engaging the respective head portions (155) of one or more detached ejector pins (154).

18. A method for ejecting moulded articles from at least one mould half (151) of an injection moulding system (1) by using the angular ejector system (150) according to any one of claims 14-17.

19. An injection moulding system (1) comprising the angular ejector system (150) according to any one of claims 14-17.

20. An injection moulding system (1) according to any of one claims 1-5, **characterised in that** the injection moulding system (1) further comprises an angular ejector system (150) according to any one of claims 14-17.
